(19) Europäisches Patentamt
European Patent Office
Office européen des brevets

(11) **EP 2 947 821 A1**

(12) # EUROPEAN PATENT APPLICATION

(43) Date of publication:
**25.11.2015 Bulletin 2015/48**

(21) Application number: **15154872.4**

(22) Date of filing: **12.02.2015**

(51) Int Cl.:
***H04L 12/26*** *(2006.01)* ***H04L 29/06*** *(2006.01)*
***H04L 12/825*** *(2013.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.05.2014 CN 201410216315**

(71) Applicant: **Huawei Technologies Co., Ltd.**
**Longgang District**
**Shenzhen, Guangdong 518129 (CN)**

(72) Inventors:
- **Deng, Xijia**
  **Shenzhen 518129 (CN)**
- **Wu, Zongwu**
  **Shenzhen 518129 (CN)**
- **Song, Xiaogang**
  **Shenzhen 518129 (CN)**

(74) Representative: **Lord, Michael**
**Gill Jennings & Every LLP**
**The Broadgate Tower**
**20 Primrose Street**
**London EC2A 2ES (GB)**

Remarks:
Amended claims in accordance with Rule 137(2) EPC.

(54) **Method for detecting network transmission status and related device**

(57) Embodiments of the present invention provide a method for detecting a network transmission status, and a related device. The method for detecting a network transmission status may include: measuring and calculating, by a first communications device, a transmission status characterization parameter used to indicate a status of network transmission between the first communications device and a second communications device; and if the transmission status characterization parameter meets a preset condition, sending, by the first communications device, a Real-Time Transport Protocol packet to the second communications device, where a packet header field of the foregoing Real-Time Transport Protocol packet carries at least one of a sending rate adjustment indication and the transmission status characterization parameter, and the sending rate adjustment indication is determined based on the transmission status characterization parameter. Technical solutions provided in the embodiments of the present invention facilitate improving of estimation precision of available network bandwidth on a transmit end, and further improve bandwidth utilization and reduce phenomena such as a delay and an intermittent stop, thereby improving user experience.

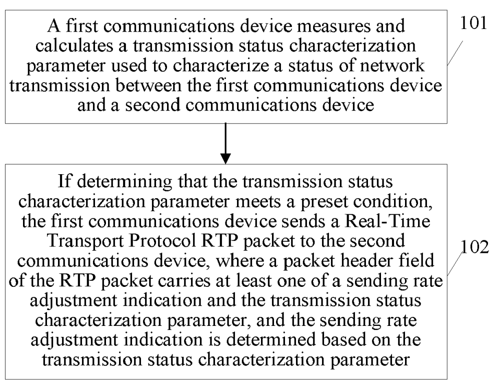


FIG. 1-a

EP 2 947 821 A1

## Description

### TECHNICAL FIELD

The present invention relates to the field of communications technologies, and in particular, to a method for detecting a network transmission status, and a related device.

### BACKGROUND

Available network bandwidth is the maximum number of bits that can be transmitted by a network in a unit time. When the volume of data that needs to be transmitted in a unit time exceeds the available network bandwidth, problems such as a packet loss and a delay are caused. In an application scenario (such as a voice/video call) sensitive to a packet loss and a delay, a transmit end needs to estimate available network bandwidth so as to ensure that bandwidth occupied by data sending is lower than the available network bandwidth.

In an application such as the Voice over Internet Protocol (VOIP), because there is a relatively high real-time requirement, generally the User Datagram Protocol is used as an underlying transport protocol. As a relatively unreliable transport protocol, the User Datagram Protocol may cause problems such as a packet loss, a delay, and out-of-order. A sending rate is a critical parameter that can be adjusted by a transmit end, where if the sending rate of the transmit end exceeds available network bandwidth, problems such as a delay and a packet loss may be caused. In an application such as VOIP, a delay and a packet loss severely affect user experience; and if the sending rate is less than the available network bandwidth, bandwidth utilization is insufficient, making it difficult for a user to obtain best experience. Therefore, correctly estimating available network bandwidth improves bandwidth utilization and reduces phenomena such as a delay and an intermittent stop, thereby improving user experience.

In the prior art, generally after measuring and calculating a transmission status characterization parameter indicating a status of transmission between a receive end and a transmit end, the receive end sends, to the transmit end, a Real-Time Transport Control Protocol (RTCP) packet that carries the measured and calculated transmission status characterization parameter, and the transmit end estimates available network bandwidth according to the transmission status characterization parameter.

In a process of studying and practising the prior art, it is found that a transmit end estimates available network bandwidth based on a transmission status characterization parameter carried in an RTCP packet from a receive end, and generally the estimated available network bandwidth is not the same as current actual available network bandwidth, which affects bandwidth utilization to some extent and at the same time may increase phenomena such as a delay and an intermittent stop, which may affect user experience.

### SUMMARY

Embodiments of the present invention provide a method for detecting a network transmission status, and a related device to improve estimation precision of available network bandwidth on a transmit end, and further improve bandwidth utilization and reduce phenomena such as a delay and an intermittent stop, so as to improve user experience.

According to a first aspect, an embodiment of the present invention provides a method for detecting a network transmission status, where the method may include:

measuring and calculating, by a first communications device, a transmission status characterization parameter used to characterize a status of network transmission between the first communications device and a second communications device; and
if the transmission status characterization parameter meets a preset condition, sending, by the first communications device, a Real-Time Transport Protocol RTP packet to the second communications device, where a packet header field of the RTP packet carries at least one of a sending rate adjustment indication and the transmission status characterization parameter, and the sending rate adjustment indication is determined based on the transmission status characterization parameter.

With reference to the first aspect, in a first possible implementation manner of the first aspect, that a packet header field of the RTP packet carries at least one of a sending rate adjustment indication and the transmission status characterization parameter is specifically that: an extension field of the packet header field of the RTP packet carries at least one of the sending rate adjustment indication and the transmission status characterization parameter.

With reference to the first aspect or the first possible implementation manner of the first aspect, in a second possible implementation manner of the first aspect, the transmission status characterization parameter includes at least one of the following parameters:

a round-trip latency between the first communications device and the second communications device, a one-way latency from the second communications device to the first communications device, a packet loss rate of an RTP packet between the first communications device and the second communications device, and a packet interval of significant packets in RTP packets from the second communications device to the first communications device.

With reference to the second possible implementation manner of the first aspect, in a third possible implementation manner of the first aspect, the transmission status characterization parameter includes the packet interval of significant packets in RTP packets from the second communications device to the first communications device; and
the measuring and calculating a transmission status characterization parameter used to characterize a status of network transmission between the first communications device and a second communications device includes: based on receiving time of received adjacent significant packets in RTP packets from the second communications device, measuring and calculating the packet interval of significant packets in RTP packets from the second communications device to the first communications device.

With reference to the second possible implementation manner of the first aspect or the third possible implementation manner of the first aspect, in a fourth possible implementation manner of the first aspect, the transmission status characterization parameter includes the one-way latency from the second communications device to the first communications device; and
the measuring and calculating a transmission status characterization parameter used to characterize a status of network transmission between the first communications device and a second communications device includes: measuring and calculating the one-way latency from the second communications device to the first communications device based on the following formula: $Cs = (Ts - T1s) - (Tr - T1r)$, where:

Cs is the one-way latency from the second communications device to the first communications device; and

Ts is sending time indicated by a sending timestamp carried in a packet header field of a first RTP packet sent by the second communications device to the first communications device; Tr is receiving time when the first communications device receives the first RTP packet; T1s is sending time indicated by a sending timestamp carried in a packet header field of a reference RTP packet sent by the second communications device to the first communications device; and T1r is receiving time when the first communications device receives the reference RTP packet.

With reference to the fourth possible implementation manner of the first aspect, in a fifth possible implementation manner of the first aspect, the reference RTP packet is the $N^{th}$ RTP packet in an RTP session corresponding to the first RTP packet, the reference RTP packet and the first RTP packet are not a same packet, and N is a positive integer.

According to a second aspect, the present invention provides a communications device, where the device includes:

a measuring and calculating unit, configured to measure and calculate a transmission status characterization parameter used to characterize a status of network transmission between the communications device and a second communications device; and
a sending unit, configured to, if the transmission status characterization parameter meets a preset condition, send a Real-Time Transport Protocol RTP packet to the second communications device, where a packet header field of the RTP packet carries at least one of a sending rate adjustment indication and the transmission status characterization parameter, and the sending rate adjustment indication is determined based on the transmission status characterization parameter.

With reference to the second aspect, in a first possible implementation manner of the second aspect, that a packet header field of the RTP packet carries at least one of a sending rate adjustment indication and the transmission status characterization parameter is specifically that: an extension field of the packet header field of the RTP packet carries at least one of the sending rate adjustment indication and the transmission status characterization parameter.

With reference to the second aspect or the first possible implementation manner of the second aspect, in a second possible implementation manner of the second aspect, the transmission status characterization parameter includes at least one of the following parameters: a round-trip latency between the communications device and the second communications device, a one-way latency from the second communications device to the communications device, a packet loss rate of an RTP packet between the communications device and the second communications device, and a packet interval of significant packets in RTP packets from the second communications device to the communications device.

With reference to the second possible implementation manner of the second aspect, in a third possible implementation manner of the second aspect, the transmission status characterization parameter includes the packet interval of significant packets in RTP packets from the second communications device to the communications device; and
the measuring and calculating unit is specifically configured to, based on receiving time of received adjacent significant packets in RTP packets from the second communications device, measure and calculate the packet interval of significant

packets in RTP packets from the second communications device to the communications device.

With reference to the second possible implementation manner of the second aspect or the third possible implementation manner of the second aspect, in a fourth possible implementation manner of the second aspect, the transmission status characterization parameter includes the one-way latency from the second communications device to the communications device; and

the measuring and calculating unit is specifically configured to, measure and calculate the one-way latency from the second communications device to the communications device based on the following formula: $Cs = (Ts - T1s) - (Tr - T1r)$, where:

Cs is the one-way latency from the second communications device to the communications device; and

Ts is sending time indicated by a sending timestamp carried in a packet header field of an RTP packet sent by the second communications device to the communications device; Tr is receiving time when the communications device receives the RTP packet; T1s is sending time indicated by a sending timestamp carried in a packet header field of a reference RTP packet sent by the second communications device to the communications device; and T1r is receiving time when the communications device receives the reference RTP packet.

With reference to the fourth possible implementation manner of the second aspect, in a fifth possible implementation manner of the second aspect, the reference RTP packet is the $N^{th}$ RTP packet in an RTP session corresponding to the first RTP packet, the reference RTP packet and the first RTP packet are not a same packet, and N is a positive integer.

It may be learned that in solutions of embodiments of the present invention, when a transmission status characterization parameter measured and calculated by a first communications device meets a preset condition, the first communications device sends, to a second communications device, an RTP packet whose packet header field carries the transmission status characterization parameter and/or a sending rate adjustment indication. In addition, generally an RTP packet has a better real-time property and sending flexibility than an RTCP packet. Therefore, the first communications device can more timely feed back, to the second communications device, a transmission status characterization parameter estimated by the first communications device or determine a sending rate adjustment indication based on the transmission status characterization parameter, and further the second communications device can improve estimation precision of available network bandwidth between the second communications device and the first communications device. Further, bandwidth utilization is improved and phenomena such as a delay and an intermittent stop are reduced, thereby improving user experience.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1-a is a schematic flowchart of a method for detecting a network transmission status according to an embodiment of the present invention;

FIG. 1-b is a schematic diagram of a change status of a one-way latency according to an embodiment of the present invention;

FIG. 2 is a schematic structural diagram of a header field of an RTP packet according to an embodiment of the present invention;

FIG. 3 is a schematic structural diagram of an extension field in a header field of an RTP packet according to an embodiment of the present invention;

FIG. 4 is a schematic diagram of a communications device according to an embodiment of the present invention;

FIG. 5 is a schematic diagram of another communications device according to an embodiment of the present invention;

FIG. 6 is a schematic diagram of another communications device according to an embodiment of the present invention; and

FIG. 7 is a schematic modular diagram of another communications device according to an embodiment of the present invention.

## DESCRIPTION OF EMBODIMENTS

Embodiments of the present invention provide a method for detecting a network transmission status, and a related device to improve estimation precision of available network bandwidth on a transmit end, and further improve bandwidth utilization and reduce phenomena such as a delay and an intermittent stop, so as to improve user experience.

To make persons skilled in the art understand the technical solutions in the present invention better, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The following separately gives detailed descriptions.

In the specification, claims, and accompanying drawings of the present invention, the terms "first", "second", "third", "fourth", and so on (if existent) are intended to distinguish between different objects but do not necessarily indicate a specific sequence. In addition, the terms "include", "have", and their variations are intended to cover a non-exclusive inclusion. For example, a process, a method, a system, a product, or a device that includes a series of steps or units is not limited to the listed steps or units, but optionally further includes a step or unit that is not listed, or optionally further includes another inherent step or unit of the process, the method, the product, or the device.

In an embodiment of a method for detecting a network transmission status in the present invention, the method for detecting a network transmission status may include: measuring and calculating, by a first communications device, a transmission status characterization parameter used to characterize a status of network transmission between the first communications device and a second communications device; and if the transmission status characterization parameter meets a preset condition, sending, by the first communications device, a Real-Time Transport Protocol packet to the second communications device, where a packet header field of the Real-Time Transport Protocol (RTP) packet carries at least one of a sending rate adjustment indication and the transmission status characterization parameter, and the sending rate adjustment indication is determined based on the transmission status characterization parameter.

Referring to FIG. 1-a, FIG. 1-a is a schematic flowchart of a method for detecting a network transmission status according to an embodiment of the present invention. As shown in FIG. 1-a, the method for detecting a network transmission status according to an embodiment of the present invention may include the following content:

101. A first communications device measures and calculates a transmission status characterization parameter used to characterize a status of network transmission between the first communications device and a second communications device.

The first communications device may measure and calculate, by using multiple policies, the transmission status characterization parameter used to characterize the status of network transmission between the first communications device and the second communications device. For example, the first communications device may measure and calculate, based on information about receiving of a packet (for example, an RTP packet and/or an RTCP packet) from the second communications device by the first communications device, the transmission status characterization parameter used to characterize the status of network transmission between the first communications device and the second communications device. A specific example is as follows: The first communications device may measure and calculate, based on whether the first communications device receives a packet (for example, an RTP packet and/or an RTCP packet) from the second communications device and receiving time of receiving a packet (for example, an RTP packet and/or an RTCP packet) from the second communications device, the transmission status characterization parameter used to characterize the status of network transmission between the first communications device and the second communications device.

102. If the transmission status characterization parameter meets a preset condition, the first communications device sends an RTP packet to the second communications device, where a packet header field of the RTP packet carries at least one of a sending rate adjustment indication and the transmission status characterization parameter, and the sending rate adjustment indication is determined based on the transmission status characterization parameter.

For example, an extension field (or another field) of the packet header field of the foregoing RTP packet may carry at least one of the sending rate adjustment indication and the transmission status characterization parameter.

It may be understood that after the first communications device and the second communications device establish an RTP session, the first communications device and the second communications device may keep exchanging RTP packets; when the transmission status characterization parameter measured and calculated by the first communications device meets the preset condition, the first communications device may add at least one of the sending rate adjustment indication and the transmission status characterization parameter to the packet header field of the RTP packet sent to the second communications device. Therefore, for step 102, it is not necessarily understood that the first communications device sends an RTP packet to the second communications device only when the transmission status characterization parameter measured and calculated by the first communications device meets the preset condition, because the first communications device and the second communications device may keep exchanging RTP packets in an RTP session process, and the first communications device mainly uses some RTP packets to transfer at least one of the sending rate adjustment indication and the foregoing measured and calculated transmission status characterization parameter to the second communications device.

For example, if the transmission status characterization parameter meets the preset condition, the sending rate adjustment indication may instruct the second communications device to decrease a sending rate of sending an RTP

packet to the first communications device.

Correspondingly, after receiving the foregoing RTP packet, the second communications device may perform operations such as an estimation of available network bandwidth and/or an adjustment to a sending rate based on the transmission status characterization parameter and/or the sending rate adjustment indication that are/is carried in the packet header field of the RTP packet. For example, when estimating, based on the foregoing transmission status characterization parameter, that the available network bandwidth is less than or close to the sending rate, the second communications device may decrease the sending rate. For another example, when the foregoing transmission status characterization parameter meets the preset condition, the second communications device may decrease the sending rate. For another example, when the foregoing sending rate adjustment indication instructs the second communications device to decrease the sending rate, the second communications device may decrease the sending rate.

It may be learned that in solutions of this embodiment, when a transmission status characterization parameter measured and calculated by a first communications device meets a preset condition, the first communications device sends, to a second communications device, an RTP packet whose packet header field carries the transmission status characterization parameter and/or a sending rate adjustment indication. In addition, generally an RTP packet has a better real-time property and sending flexibility than an RTCP packet. Therefore, the first communications device can more timely feed back, to the second communications device, a transmission status characterization parameter estimated by the first communications device or determine a sending rate adjustment indication based on the transmission status characterization parameter, and further the second communications device (if the second communications device sends data to the first communications device, the second communications device may be considered as a transmit end of the first communications device) can improve estimation precision of available network bandwidth between the second communications device and the first communications device. Further, bandwidth utilization is improved and phenomena such as a delay and an intermittent stop are reduced, thereby improving user experience.

In a conventional technology, an RTCP report is used to feed back a transmission status characterization parameter such as a packet loss rate; but in a scenario in which an RTCP report is used to feed back a transmission status characterization parameter, generally the RTCP report has a relatively long feedback interval because of a transmission bandwidth limitation; when perceiving a network sending change, generally a receive end sends a feedback message only in a next feedback period, so that a transmission status characterization parameter cannot be fed back timely. However, in this embodiment of the present invention, an RTP extension header is used to feed back a transmission status characterization parameter, the transmission status characterization parameter that needs to be fed back may be sent together with data, and the transmission status characterization parameter and the like may be fed back basically at any time, so that a transmit end can more quickly collect a parameter required during bandwidth detection, thereby accelerating a bandwidth detection speed.

The transmission status characterization parameter may be various transmission status characterization parameters that can characterize a status of network transmission between the first communications device and the second communications device. For example, the transmission status characterization parameter may include at least one of the following parameters:

a round-trip latency between the first communications device and the second communications device, a one-way latency from the second communications device to the first communications device, a packet loss rate of an RTP packet between the first communications device and the second communications device, a packet interval of significant packets in RTP packets from the second communications device to the first communications device, a rate of receiving an RTP packet from the second communications device by the first communications device, and the like.

In some embodiments of the present invention, if the transmission status characterization parameter includes the packet interval of significant packets in RTP packets from the second communications device to the first communications device, the measuring and calculating a transmission status characterization parameter used to characterize a status of network transmission between the first communications device and a second communications device may specifically include: based on receiving time of received adjacent significant packets in RTP packets from the second communications device, measuring and calculating the packet interval of significant packets in RTP packets from the second communications device to the first communications device.

For example, when the second communications device and the first communications device transmit data to each other by using the RTP protocol, a marker (marker) bit in a field of the RTP protocol may be used to mark a significant packet. In an application such as VOIP, the second communications device may mark a packet last sent in a video frame or an audio frame, as a significant packet. On a receive end (for example, the first communications device) of an RTP data stream, a time interval of significant packets of adjacent RTP packets marked with a marker may be calculated; if the time interval is less than a fourth threshold (for example, 15 to 25 milliseconds), it may be considered that a current sending rate is extremely close to available network bandwidth, and it is necessary to instruct a transmit end (the second communications device) to modify the sending rate so as to reserve a margin.

It is found from tests and practice that a packet interval of significant packets in RTP packets generally changes with a latency in a timely manner; therefore, a status of a network latency from a transmit end (the second communications device) to a receive end (the first communications device) can be better characterized by using a one-way latency.

In some embodiments of the present invention, the transmission status characterization parameter includes the one-way latency from the second communications device to the first communications device, and the measuring and calculating a transmission status characterization parameter used to characterize a status of network transmission between the first communications device and a second communications device includes: measuring and calculating the one-way latency from the second communications device to the first communications device based on the following formula:

$$Cs = (Ts - T1s) - (Tr - T1r).$$

Cs is the one-way latency from the second communications device to the first communications device; and

Ts is sending time indicated by a sending timestamp carried in a packet header field of a first RTP packet sent by the second communications device to the first communications device; Tr is receiving time when the first communications device receives the first RTP packet; T1s is sending time indicated by a sending timestamp carried in a packet header field of a reference RTP packet sent by the second communications device to the first communications device; and T1r is receiving time when the first communications device receives the reference RTP packet.

In some embodiments of the present invention, the reference RTP packet is the $N^{th}$ RTP packet in an RTP session corresponding to the first RTP packet, the reference RTP packet and the first RTP packet are different RTP packets, and N is a positive integer. For example, N may be equal to 1, 2, 3, 4, 5, 8, 10, 20, or another specific value.

It is found from tests and practice that a one-way latency generally changes with a latency in a timely manner; in addition, a one-way latency indicates a unidirectional latency and can be used to distinguish whether a latency is introduced from an uplink or a downlink; therefore, a status of a network latency from a transmit end (the second communications device) to a receive end (the first communications device) can be better characterized by using a one-way latency.

Further, based on the foregoing one-way latency calculation manner proposed in this embodiment, calculation of the one-way latency from the second communications device to the first communications device can be relatively accurate, so that a good data foundation is laid for subsequent processing.

The first communications device may determine, in various manners, that the transmission status characterization parameter meets the preset condition.

For example, in some embodiments of the present invention, determining, by the first communications device, that the transmission status characterization parameter meets the preset condition may include the following: If the transmission status characterization parameter includes the packet loss rate of an RTP packet between the first communications device and the second communications device, and the packet loss rate is greater than or equal to a first threshold, the first communications device can determine that the transmission status characterization parameter meets the preset condition.

For another example, determining, by the first communications device, that the transmission status characterization parameter meets the preset condition may include the following: If the transmission status characterization parameter includes the round-trip latency between the first communications device and the second communications device, and the round-trip latency is greater than or equal to a second threshold, the first communications device determines that the transmission status characterization parameter meets the preset condition.

For another example, determining, by the first communications device, that the transmission status characterization parameter meets the preset condition may include the following: If the transmission status characterization parameter includes the one-way latency from the second communications device to the first communications device, and the one-way latency is greater than or equal to a third threshold, the first communications device determines that the transmission status characterization parameter meets the preset condition.

For another example, determining, by the first communications device, that the transmission status characterization parameter meets the preset condition may include the following: If the transmission status characterization parameter includes the packet interval of significant packets in RTP packets from the second communications device to the first communications device, and the packet interval of significant packets is less than or equal to a fourth threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second

communications device, and the round-trip latency between the first communications device and the second communications device, the packet loss rate is greater than or equal to the first threshold, and the round-trip latency is greater than or equal to the second threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second communications device, and the one-way latency from the second communications device to the first communications device, the packet loss rate is greater than or equal to the first threshold, and the one-way latency is greater than or equal to the third threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second communications device, and the packet interval of significant packets in RTP packets from the second communications device to the first communications device, the packet loss rate is greater than or equal to the first threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization parameter includes the round-trip latency between the first communications device and the second communications device, and the one-way latency from the second communications device to the first communications device, the round-trip latency is greater than or equal to the second threshold, and the one-way latency is greater than or equal to the third threshold, the first communications device determines that the transmission status characterization parameter meets the preset condition.

For another example, determining, by the first communications device, that the transmission status characterization parameter meets the preset condition may include the following: If the transmission status characterization parameter includes the round-trip latency between the first communications device and the second communications device, and the packet interval of significant packets in RTP packets from the second communications device to the first communications device, the round-trip latency is greater than or equal to the second threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization parameter includes the one-way latency from the second communications device to the first communications device, and the packet interval of significant packets in RTP packets from the second communications device to the first communications device, the one-way latency is greater than or equal to the third threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second communications device, the round-trip latency between the first communications device and the second communications device, and the one-way latency from the second communications device to the first communications device, the packet loss rate is greater than or equal to the first threshold, the round-trip latency is greater than or equal to the second threshold, and the one-way latency is greater than or equal to the third threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second communications device, the packet interval of significant packets in RTP packets from the second communications device to the first communications device, and the round-trip latency between the first communications device and the second communications device, the packet loss rate is greater than or equal to the first threshold, the round-trip latency is greater than or equal to the second threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization

parameter includes the packet loss rate of an RTP packet between the first communications device and the second communications device, the packet interval of significant packets in RTP packets from the second communications device to the first communications device, and the one-way latency from the second communications device to the first communications device, the packet loss rate is greater than or equal to the first threshold, the one-way latency is greater than or equal to the third threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization parameter includes the round-trip latency between the first communications device and the second communications device, the packet interval of significant packets in RTP packets from the second communications device to the first communications device, and the one-way latency from the second communications device to the first communications device, the round-trip latency is greater than or equal to the second threshold, the one-way latency is greater than or equal to the third threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second communications device, the round-trip latency between the first communications device and the second communications device, the packet interval of significant packets in RTP packets from the second communications device to the first communications device, and the one-way latency from the second communications device to the first communications device, the packet loss rate is greater than or equal to the first threshold, the round-trip latency is greater than or equal to the second threshold, the one-way latency is greater than or equal to the third threshold, and the packet interval of significant packets is less than or equal to the fourth threshold, the first communications device determines that the transmission status characterization parameter meets the preset condition.

For another example, determining, by the first communications device, that the transmission status characterization parameter meets the preset condition may include the following: If the transmission status characterization parameter includes the packet loss rate of an RTP packet between the first communications device and the second communications device, the packet loss rate is less than the first threshold and greater than a fifth threshold, and a packet loss rate state indication bit indicates an abnormal packet loss rate state, the first communications device determines that the transmission status characterization parameter meets the preset condition, where the fifth threshold is less than the first threshold; if the packet loss rate is greater than or equal to the first threshold, the first communications device determines that the transmission status characterization parameter meets the preset condition, where

the method further includes the following: If the packet loss rate is greater than or equal to the first threshold, and the packet loss rate state indication bit indicates a normal packet loss rate state, the first communications device sets that the packet loss rate state indication bit indicates the abnormal packet loss rate state; if the packet loss rate is less than or equal to the fifth threshold, and the packet loss rate state indication bit indicates the abnormal packet loss rate state, the first communications device sets that the packet loss rate state indication bit indicates the normal packet loss rate state.

For another example, determining, by the first communications device, that the transmission status characterization parameter meets the preset condition may include the following: If the transmission status characterization parameter includes the round-trip latency between the first communications device and the second communications device, the round-trip latency is less than the second threshold and greater than a sixth threshold, and a round-trip latency state indication bit indicates an abnormal round-trip latency state, the first communications device determines that the transmission status characterization parameter meets the preset condition, where the sixth threshold is less than the second threshold; if the round-trip latency is greater than or equal to the second threshold, the first communications device determines that the transmission status characterization parameter meets the preset condition, where

the method further includes the following: If the round-trip latency is greater than or equal to the second threshold, and the round-trip latency state indication bit indicates a normal round-trip latency state, the first communications device sets that the round-trip latency state indication bit indicates the abnormal round-trip latency state; if the round-trip latency is less than or equal to the sixth threshold, and the round-trip latency state indication bit indicates the abnormal round-trip latency state, the first communications device sets that the round-trip latency state indication bit indicates the normal round-trip latency state.

For another example, determining, by the first communications device, that the transmission status characterization parameter meets the preset condition may include the following: If the transmission status characterization parameter includes the one-way latency from the second communications device to the first communications device, the one-way latency is less than the third threshold and greater than a seventh threshold, and a one-way latency state indication bit indicates an abnormal one-way latency state, the first communications device determines that the transmission status characterization parameter meets the preset condition, where the seventh threshold is less than the third threshold; if the one-way latency is greater than or equal to the third threshold, the first communications device determines that the transmission status characterization parameter meets the preset condition, where

the method further includes the following: If the one-way latency is greater than or equal to the third threshold, and the one-way latency state indication bit indicates a normal one-way latency state, the first communications device sets that the one-way latency state indication bit indicates the abnormal one-way latency state; if the one-way latency is less than or equal to the seventh threshold, and the one-way latency state indication bit indicates the abnormal one-way latency state, the first communications device sets that the one-way latency state indication bit indicates the normal one-way latency state.

For example, as shown in FIG. 1-b, it is assumed that: from a moment T0 to a moment T1, the one-way latency, measured and calculated by the first communications device, from the second communications device to the first communications device is less than the seventh threshold, the first communications device may set that the one-way latency state indication bit indicates the normal one-way latency state, and the first communications device may determine that the transmission status characterization parameter does not meet the preset condition; from the moment T1 to a moment T2, the one-way latency, measured and calculated by the first communications device, from the second communications device to the first communications device is greater than the seventh threshold and less than the third threshold, and because the one-way latency state indication bit indicates the normal one-way latency state, the first communications device may determine that the transmission status characterization parameter does not meet the preset condition; from the moment T2 to a moment T3, the one-way latency, measured and calculated by the first communications device, from the second communications device to the first communications device is less than the seventh threshold, the first communications device may determine that the transmission status characterization parameter does not meet the preset condition; from the moment T3 to a moment T4, the one-way latency, measured and calculated by the first communications device, from the second communications device to the first communications device is greater than the seventh threshold and less than the third threshold, and because the one-way latency state indication bit indicates the normal one-way latency state, the first communications device may determine that the transmission status characterization parameter does not meet the preset condition; from the moment T4 to a moment T5, the one-way latency, measured and calculated by the first communications device, from the second communications device to the first communications device is greater than the third threshold, the first communications device sets that the one-way latency state indication bit indicates the abnormal one-way latency state, and the first communications device may determine that the transmission status characterization parameter meets the preset condition; from the moment T5 to a moment T6, the one-way latency, measured and calculated by the first communications device, from the second communications device to the first communications device is greater than the seventh threshold and less than the third threshold, and because the one-way latency state indication bit indicates the abnormal one-way latency state, the first communications device may determine that the transmission status characterization parameter meets the preset condition; from the moment T6 to a moment T7, the one-way latency, measured and calculated by the first communications device, from the second communications device to the first communications device is less than the seventh threshold, the first communications device sets that the one-way latency state indication bit indicates the normal one-way latency state, and the first communications device may determine that the transmission status characterization parameter does not meet the preset condition, and so on.

For each of the first threshold, the second threshold, the third threshold, the fourth threshold, the fifth threshold, the sixth threshold, the seventh threshold, , a different value may be set according to a different application environment or scenario.

For example, a value range of the first threshold may be 5% to 10%, and the first threshold may be specifically set to, for example, 5%, 6%, 7%, 8%, 9%, or 10%.

For example, a value range of the fifth threshold may be 1% to 3%, and the fifth threshold may be specifically set to, for example, 1%, 2%, 2.5%, or 3%.

For example, a value range of the second threshold may be 800 milliseconds to 1500 milliseconds, and the second threshold may be specifically set to, for example, 800 milliseconds, 900 milliseconds, 1000 milliseconds, 1200 milliseconds, or 1400 milliseconds.

For example, a value range of the sixth threshold may be 200 milliseconds to 500 milliseconds, and the sixth threshold may be specifically set to, for example, 200 milliseconds, 250 milliseconds, 300 milliseconds, 400 milliseconds, or 500 milliseconds.

For example, a value range of the third threshold may be 400 milliseconds to 800 milliseconds, and the third threshold may be specifically set to, for example, 400 milliseconds, 500 milliseconds, 600 milliseconds, 700 milliseconds, or 800 milliseconds.

For example, a value range of the seventh threshold may be 100 milliseconds to 250 milliseconds, and the seventh threshold may be specifically set to, for example, 100 milliseconds, 150 milliseconds, 200 milliseconds, or 250 milliseconds.

For example, a value range of the fourth threshold may be 10 milliseconds to 15 milliseconds, and the fourth

threshold may be specifically set to, for example, 10 milliseconds, 11 milliseconds, 12 milliseconds, 13 milliseconds, 14 milliseconds, or 15 milliseconds.

It may be understood that the foregoing mechanisms for determining whether a transmission status characterization parameter meets a preset condition are only examples and may be flexibly selected and adjusted according to different application scenarios, and a mechanism for determining whether another transmission status characterization parameter meets a preset condition may also be obtained by analogy.

Referring to FIG. 2, FIG. 2 is a structure of a header field of an RTP packet according to an embodiment of the present invention.

Version (V): is of 2 bits and used to identify a version of a RTP in use. In FIG. 3, version 2 is used as an example.

Padding (P): is of 1 bit. For example, if the padding bit is set to 1, the RTP packet includes an additional padding octet at the end.

Extension (X): is of 1 bit. If the extension bit is set to 1, a fixed RTP header is followed by one extension field.

CSRC count (CC): is of 4 bits and indicates the number of contributing source (CSRC) identifiers that follow the fixed header, where there are a maximum of 15 contributing source identifiers.

Marker (M): is of 1 bit, an interpretation of the marker bit is defined by a profile (Profile), and the marker bit is generally used to characterize a significant packet.

Payload type (PT): is of 7 bits and identifies a format of an RTP payload, such as an encoding format.

Sequence number (sequence number): is of 16 bits, this field increases by one for each RTP packet sent by a sender and may be used by a receiver to detect a packet loss and to restore a packet sequence, and an initial value of the sequence number is random.

Timestamp (timestamp): is of 32 bits and may record a sampling instant of the first byte of data in the packet.

Synchronization source (SSRC) identifier: is of 32 bits and used to identify a sender of an RTP packet.

Contributing source (CSRC) identifier: has 0 to 15 items, and each item is of 32 bits. When there are more than 15 contributing sources, only 15 can be identified. The CSRC is used to identify sources of all RTP packets that has contributed to a new packet generated by an RTP mixer, and the RTP mixer may insert these SSRC identifiers that have made contributions, into an RTP header field.

Extension field: may be used to carry at least one of a transmission status characterization parameter and a sending rate adjustment indication. FIG. 3 shows an example of a specific structure of the extension field, where at least one of the transmission status characterization parameter and the sending rate adjustment indication may be carried in a header extension field of the extension field.

An example is further used in the following to introduce a formula for determining, by a second communications device, a sending rate based on a packet loss rate, a round-trip latency, and the like:

$$X = \frac{S}{R\sqrt{\frac{2bp}{3}} + t_RTO \times 3 \times \sqrt{\frac{3 \times b \times p}{8}} \times p \times (1 + 32 \times p^2)}$$

In the foregoing formula, X represents the sending rate (byte/s), P represents the packet loss rate (a value range of P is 0 to 1.0), S represents a packet size (byte), R represents the round-trip latency (second), t_RTO represents a retransmission timeout value (second) of a Transmission Control Protocol packet, and b represents the number of packets acknowledged by a single Transmission Control Protocol response.

It may be learned that in some embodiments of the present invention, transmission status characterization parameters such as a one-way latency and a packet interval of significant packets are selected to characterize a transmission status, and these parameters are more sensitive to a delay caused by a bandwidth limitation, so that a detection speed of available network bandwidth can be accelerated. When network bandwidth is limited, there is generally an increase in a transmission latency of an RTP packet at first. Because the transmission status characterization parameters such as a one-way latency and a packet interval of significant packets may be calculated in real time according to an RTP packet stream, a network transmission status can be perceived at an initial stage of network congestion, and the transmission status is fed back to a transmit end, so that after receiving the feedback, the transmit end performs operations such as an estimation of available network bandwidth and an adjustment to a sending rate. Further, occurrence of more severe congestion or packet loss can be prevented during network transmission, and therefore the sending rate is close to actual available network bandwidth.

Further, if a dual-threshold mechanism is used to determine whether a transmission status characterization parameter (for example, a one-way latency and a packet interval of significant packets) meets a preset condition, an abnormal feedback, which causes that a transmit end frequently adjusts a sending bit rate, due to a slight fluctuation of network bandwidth can be prevented, so that stability and robustness of a bandwidth detection mechanism can be greatly improved.

Referring to FIG. 4, an embodiment of the present invention further provides a communications device 400, which may include a measuring and calculating unit 410 and a sending unit 420, where:

the measuring and calculating unit 410 is configured to measure and calculate a transmission status characterization parameter used to characterize a status of network transmission between the communications device and a second communications device; and

the sending unit 420 is configured to, if the transmission status characterization parameter meets a preset condition, send a Real-Time Transport Protocol RTP packet to the second communications device, where a packet header field of the RTP packet carries at least one of a sending rate adjustment indication and the transmission status characterization parameter, and the sending rate adjustment indication is determined based on the transmission status characterization parameter.

The measuring and calculating unit 410 may measure and calculate, by using multiple policies, the transmission status characterization parameter used to characterize the status of network transmission between the communications device 400 and the second communications device. For example, the measuring and calculating unit 410 may measure and calculate, based on information about receiving of a packet (for example, an RTP packet and/or an RTCP packet) from the second communications device by the communications device 400, the transmission status characterization parameter used to characterize status of the network transmission between the communications device 400 and the second communications device. A specific example is as follows: The measuring and calculating unit 410 may measure and calculate, based on whether the communications device 400 receives a packet (for example, an RTP packet and/or an RTCP packet) from the second communications device and receiving time of receiving a packet (for example, an RTP packet and/or an RTCP packet) from the second communications device, the transmission status characterization parameter used to characterize the status of network transmission between the communications device 400 and the second communications device.

Correspondingly, after receiving the foregoing RTP packet, the second communications device may perform operations such as an estimation of available network bandwidth and/or an adjustment to a sending rate based on the transmission status characterization parameter and/or the sending rate adjustment indication that are/is carried in the packet header field of the RTP packet. For example, when estimating, based on the foregoing transmission status characterization parameter, that the available network bandwidth is less than or close to the sending rate, the second communications device may decrease the sending rate. For another example, when the foregoing transmission status characterization parameter meets the preset condition, the second communications device may decrease the sending rate. For another example, when the foregoing sending rate adjustment indication instructs the second communications device to decrease the sending rate, the second communications device may decrease the sending rate.

In some embodiments of the present invention, that a packet header field of the RTP packet carries at least one of a sending rate adjustment indication and the transmission status characterization parameter is specifically that: an extension field (or another field) of the packet header field of the RTP packet carries at least one of the sending rate adjustment indication and the transmission status characterization parameter.

In some embodiments of the present invention, the transmission status characterization parameter may include at least one of the following parameters: a round-trip latency between the communications device and the second communications device, a one-way latency from the second communications device to the communications device, a packet loss rate of an RTP packet between the communications device and the second communications device, and a packet interval of significant packets in RTP packets from the second communications device to the communications device.

In some embodiments of the present invention, the transmission status characterization parameter includes the packet interval of significant packets in RTP packets from the second communications device to the communications device, where the measuring and calculating unit 410 may be specifically configured to, based on receiving time of received adjacent significant packets in RTP packets from the second communications device, measure and calculate the packet interval of significant packets in RTP packets from the second communications device to the communications device.

In some embodiments of the present invention, the transmission status characterization parameter includes the one-way latency from the second communications device to the communications device, where

the measuring and calculating unit 410 may be specifically configured to, measure and calculate the one-way latency from the second communications device to the communications device based on the following formula: $Cs = (Ts - T1s) - (Tr - T1r)$, where:

Cs is the one-way latency from the second communications device to the communications device; and

Ts is sending time indicated by a sending timestamp carried in a packet header field of an RTP packet sent by the second communications device to the communications device; Tr is receiving time when the communications device receives the RTP packet; T1s is sending time indicated by a sending timestamp carried in a packet header field of a reference RTP packet sent by the second communications device to the communications device; and T1r is receiving time when the communications device receives the reference RTP packet.

In some embodiments of the present invention, the reference RTP packet is the Nth RTP packet in an RTP session corresponding to the RTP packet, the reference RTP packet and the first RTP packet are not a same RTP packet, and N is a positive integer. For example, N may be equal to 1, 2, 3, 4, 5, 8, 10, 20, or another specific value.

The measuring and calculating unit 410 may determine, in various manners, that the foregoing transmission status characterization parameter meets the preset condition. For example, the measuring and calculating unit 410 may determine, based on the manners illustrated in the foregoing method embodiments, that the foregoing transmission status characterization parameter meets the preset condition. For specific manners, refer to the foregoing descriptions. Details are not provided herein again.

It may be understood that the communications device 400 in this embodiment may be configured to implement some or all functions of the first communications device in the foregoing method embodiments, and a function of each functional module of the communications device 400 may be specifically implemented according to the methods in the foregoing method embodiments. For a specific implementation process, refer to related descriptions in the foregoing method embodiments. Details are not provided herein again.

It may be learned that in solutions of this embodiment, when a transmission status characterization parameter measured and calculated by a communications device 400 meets a preset condition, the communications device 400 sends, to a second communications device, an RTP packet whose packet header field carries the transmission status characterization parameter and/or a sending rate adjustment indication. In addition, generally an RTP packet has a better real-time property and sending flexibility than an RTCP packet. Therefore, the communications device 400 can more timely feed back, to the second communications device, a transmission status characterization parameter estimated by the communications device 400 or determine a sending rate adjustment indication based on the transmission status characterization parameter, and further the second communications device (if the second communications device sends data to the communications device 400, the second communications device may be considered as a transmit end of the communications device 400) can improve estimation precision of available network bandwidth between the second communications device and the communications device 400. Further, bandwidth utilization is improved and phenomena such as a delay and an intermittent stop are reduced, thereby improving user experience.

Further, in some embodiments of the present invention, transmission status characterization parameters such as a one-way latency and a packet interval of significant packets are selected to characterize a transmission status, and these parameters are more sensitive to a delay caused by a bandwidth limitation, so that a detection speed of available network bandwidth can be accelerated. When network bandwidth is limited, there is generally an increase in a transmission latency of an RTP packet at first. Because transmission status characterization parameters such as a one-way latency and a packet interval of significant packets may be calculated in real time according to an RTP packet stream, a network transmission status can be perceived at an initial stage of network congestion, and the transmission status is fed back to a transmit end, so that after receiving the feedback, the transmit end performs operations such as an estimation of available network bandwidth and an adjustment to a sending rate. Further, occurrence of more severe congestion or packet loss can be prevented during network transmission, and therefore the sending rate is close to actual available network bandwidth.

Further, if a dual-threshold mechanism is used to determine whether a transmission status characterization parameter (for example, a one-way latency and a packet interval of significant packets) meets a preset condition, an abnormal feedback, which causes that a transmit end frequently adjusts a sending bit rate, due to a slight fluctuation of network bandwidth can be prevented, so that stability and robustness of a bandwidth detection mechanism can be greatly improved.

Referring to FIG. 5, FIG. 5 is a schematic diagram of a communications device 500 according to an embodiment of the present invention. The communications device 500 may include at least one bus 501, at least one processor 502 connected to the bus 501, and at least one memory 503 connected to the bus 501.

The processor 502 invokes, by using the bus 501, code stored in the memory 503, so as to measure and calculate a transmission status characterization parameter used to characterize a status of network transmission between the communications device and a second communications device; if the transmission status characterization parameter meets a preset condition, send a Real-Time Transport Protocol RTP packet to the second communications device, where a packet header field of the RTP packet carries at least one of a sending rate adjustment indication and the transmission status characterization parameter, and the sending rate adjustment indication is determined based on the transmission status characterization parameter.

The processor 502 may measure and calculate, by using multiple policies, the transmission status characterization parameter used to characterize the status of network transmission between the communications device 500 and the second communications device. For example, the processor 502 may measure and calculate, based on information about receiving of a packet (for example, an RTP packet and/or an RTCP packet) from the second communications device by the communications device 500, the transmission status characterization parameter used to characterize the status of network transmission between the communications device 500 and the second communications device. A specific example is as follows: The processor 502 may measure and calculate, based on whether the communications

device 500 receives a packet (for example, an RTP packet and/or an RTCP packet) from the second communications device and receiving time of receiving a packet (for example, an RTP packet and/or an RTCP packet) from the second communications device, the transmission status characterization parameter used to characterize the status of network transmission between the communications device 500 and the second communications device.

Correspondingly, after receiving the foregoing RTP packet, the second communications device may perform operations such as an estimation of available network bandwidth and/or an adjustment to a sending rate based on the transmission status characterization parameter and/or the sending rate adjustment indication that are/is carried in the packet header field of the RTP packet. For example, when estimating, based on the foregoing transmission status characterization parameter, that the available network bandwidth is less than or close to the sending rate, the second communications device may decrease the sending rate. For another example, when the foregoing transmission status characterization parameter meets the preset condition, the second communications device may decrease the sending rate. For another example, when the foregoing sending rate adjustment indication instructs the second communications device to decrease the sending rate, the second communications device may decrease the sending rate.

In some embodiments of the present invention, that a packet header field of the RTP packet carries at least one of a sending rate adjustment indication and the transmission status characterization parameter is specifically that: an extension field (or another field) of the packet header field of the RTP packet carries at least one of the sending rate adjustment indication and the transmission status characterization parameter.

In some embodiments of the present invention, the transmission status characterization parameter may include at least one of the following parameters: a round-trip latency between the communications device 500 and the second communications device, a one-way latency from the second communications device to the communications device 500, a packet loss rate of an RTP packet between the communications device 500 and the second communications device, and a packet interval of significant packets in RTP packets from the second communications device to the communications device 500.

In some embodiments of the present invention, the transmission status characterization parameter includes the packet interval of significant packets in RTP packets from the second communications device to the communications device, where in an aspect of measuring and calculating the transmission status characterization parameter used to characterize the status of network transmission between the communications device and the second communications device, the processor 502 may be specifically configured to: based on receiving time of received adjacent significant packets in RTP packets from the second communications device, measure and calculate the packet interval of significant packets in RTP packets from the second communications device to the communications device.

In some embodiments of the present invention, the transmission status characterization parameter includes the one-way latency from the second communications device to the first communications device, where

in the aspect of measuring and calculating the transmission status characterization parameter used to characterize the status of network transmission between the communications device and the second communications device, the processor 502 may be specifically configured to: measure and calculate the one-way latency from the second communications device to the communications device based on the following formula: $Cs = (Ts - T1s) - (Tr - T1r)$, where:

Cs is the one-way latency from the second communications device to the communications device; and

Ts is sending time indicated by a sending timestamp carried in a packet header field of an RTP packet sent by the second communications device to the communications device; Tr is receiving time when the communications device receives the RTP packet; T1s is sending time indicated by a sending timestamp carried in a packet header field of a reference RTP packet sent by the second communications device to the communications device; and T1r is receiving time when the communications device receives the reference RTP packet.

In some embodiments of the present invention, the reference RTP packet is the Nth RTP packet in an RTP session corresponding to the first RTP packet, the reference RTP packet and the first RTP packet are not a same RTP packet, and N is a positive integer. For example, N may be equal to 1, 2, 3, 4, 5, 8, 10, 20, or another specific value.

The processor 502 may determine, in various manners, that the foregoing transmission status characterization parameter meets the preset condition. For example, the processor 502 may determine, based on the manners illustrated in the foregoing method embodiments, that the foregoing transmission status characterization parameter meets the preset condition. For specific manners, refer to the foregoing descriptions. Details are not provided herein again.

It may be understood that the communications device 500 in this embodiment may be configured to implement some or all functions of the first communications device in the foregoing method embodiments, and a function of each functional module of the communications device 500 may be specifically implemented according to the methods in the foregoing method embodiments. For a specific implementation process, refer to related descriptions in the foregoing method embodiments. Details are not provided herein again.

It may be learned that in solutions of this embodiment, when a transmission status characterization parameter measured and calculated by a communications device 500 meets a preset condition, the communications device 500 sends, to a second communications device, an RTP packet whose packet header field carries the transmission status characterization parameter and/or a sending rate adjustment indication. In addition, generally an RTP packet has a

better real-time property and sending flexibility than an RTCP packet. Therefore, the communications device 500 can more timely feed back, to the second communications device, a transmission status characterization parameter estimated by the communications device 500 or determine a sending rate adjustment indication based on the transmission status characterization parameter, and further the second communications device (if the second communications device sends data to the communications device 500, the second communications device may be considered as a transmit end of the communications device 500) can improve estimation precision of available network bandwidth between the second communications device and the communications device 500. Further, bandwidth utilization is improved and phenomena such as a delay and an intermittent stop are reduced, thereby improving user experience.

Further, in some embodiments of the present invention, transmission status characterization parameters such as a one-way latency and a packet interval of significant packets are selected to characterize a transmission status, and these parameters are more sensitive to a delay caused by a bandwidth limitation, so that a detection speed of available network bandwidth can be accelerated. When network bandwidth is limited, there is generally an increase in a transmission latency of an RTP packet at first. Because transmission status characterization parameters such as a one-way latency and a packet interval of significant packets may be calculated in real time according to an RTP packet stream, a network transmission status can be perceived at an initial stage of network congestion, and the transmission status is fed back to a transmit end, so that after receiving the feedback, the transmit end performs operations such as an estimation of available network bandwidth and an adjustment to a sending rate. Further, occurrence of more severe congestion or packet loss can be prevented during network transmission, and therefore the sending rate is close to actual available network bandwidth.

Further, if a dual-threshold mechanism is used to determine whether a transmission status characterization parameter (for example, a one-way latency and a packet interval of significant packets) meets a preset condition, an abnormal feedback, which causes that a transmit end frequently adjusts a sending bit rate, due to a slight fluctuation of network bandwidth can be prevented, so that stability and robustness of a bandwidth detection mechanism can be greatly improved.

Referring to FIG. 6, FIG. 6 is a structural block diagram of a communications device 600 according to another embodiment of the present invention.

The communications device 600 may include: at least one processor 601, at least one network interface 604 or another user interface 603, a memory 605, and at least one communications bus 602. The communications bus 602 is configured to implement connections and communication between these components. The communications device 600 optionally includes the user interface 603, including: a display (for example, a touch screen, an LCD, a CRT, a device for displaying a holographic image (Holographic), or a projector (Projector)), a click device (for example, a mouse device, a trackball (trackball), a touch panel, or a touch screen), a camera, a sound pickup apparatus, and/or the like.

The memory 605, for example, may include a read-only memory and a random access memory and provide an instruction and data for the processor 601.

A part of the memory 605 further includes a nonvolatile random access memory (NVRAM) and the like.

In some implementation manners, the memory 605 stores the following elements, an executable module or a data structure, their subsets, or their extended sets: an operating system 6051, which includes various system programs used to implement various basic services and process tasks based on hardware; and an application program module 6052, which includes various application programs used to implement various application services.

In this embodiment of the present invention, by invoking a program or an instruction stored in the memory 602, the processor 601 measures and calculates a transmission status characterization parameter used to characterize a status of network transmission between the communications device and a second communications device; if the transmission status characterization parameter meets a preset condition, sends a Real-Time Transport Protocol RTP packet to the second communications device, where a packet header field of the RTP packet carries at least one of a sending rate adjustment indication and the transmission status characterization parameter, and the sending rate adjustment indication is determined based on the transmission status characterization parameter.

The processor 601 may measure and calculate, by using multiple policies, the transmission status characterization parameter used to characterize the status of network transmission between the communications device 600 and the second communications device. For example, the processor 601 may measure and calculate, based on information about receiving of a packet (for example, an RTP packet and/or an RTCP packet) from the second communications device by the communications device 600, the transmission status characterization parameter used to characterize the status of network transmission between the communications device 600 and the second communications device. A specific example is as follows: The processor 601 may measure and calculate, based on whether the communications device 600 receives a packet (for example, an RTP packet and/or an RTCP packet) from the second communications device and receiving time of receiving a packet (for example, an RTP packet and/or an RTCP packet) from the second communications device, the transmission status characterization parameter used to characterize the status of network transmission between the communications device 600 and the second communications device.

Correspondingly, after receiving the foregoing RTP packet, the second communications device may perform

operations such as an estimation of available network bandwidth and/or an adjustment to a sending rate based on the transmission status characterization parameter and/or the sending rate adjustment indication that are/is carried in the packet header field of the RTP packet. For example, when estimating, based on the foregoing transmission status characterization parameter, that the available network bandwidth is less than or close to the sending rate, the second communications device may decrease the sending rate. For another example, when the foregoing transmission status characterization parameter meets the preset condition, the second communications device may decrease the sending rate. For another example, when the foregoing sending rate adjustment indication instructs the second communications device to decrease the sending rate, the second communications device may decrease the sending rate.

In some embodiments of the present invention, that a packet header field of the RTP packet carries at least one of a sending rate adjustment indication and the transmission status characterization parameter is specifically that: an extension field (or another field) of the packet header field of the RTP packet carries at least one of the sending rate adjustment indication and the transmission status characterization parameter.

In some embodiments of the present invention, the transmission status characterization parameter may include at least one of the following parameters: a round-trip latency between the communications device 600 and the second communications device, a one-way latency from the second communications device to the communications device 600, a packet loss rate of an RTP packet between the communications device 600 and the second communications device, and a packet interval of significant packets in RTP packets from the second communications device to the communications device 600.

In some embodiments of the present invention, the transmission status characterization parameter includes the packet interval of significant packets in RTP packets from the second communications device to the communications device, where in an aspect of measuring and calculating the transmission status characterization parameter used to characterize the status of network transmission between the communications device and the second communications device, the processor 601 may be specifically configured to: based on receiving time of received adjacent significant packets in RTP packets from the second communications device, measure and calculate the packet interval of significant packets in RTP packets from the second communications device to the communications device.

In some embodiments of the present invention, the transmission status characterization parameter includes the one-way latency from the second communications device to the first communications device, where

in the aspect of measuring and calculating the transmission status characterization parameter used to characterize the status of network transmission between the communications device and the second communications device, the processor 601 may be specifically configured to: measure and calculate the one-way latency from the second communications device to the communications device based on the following formula: $Cs = (Ts - T1s) - (Tr - T1r)$, where:

Cs is the one-way latency from the second communications device to the communications device; and

Ts is sending time indicated by a sending timestamp carried in a packet header field of an RTP packet sent by the second communications device to the communications device; Tr is receiving time when the communications device receives the RTP packet; T1s is sending time indicated by a sending timestamp carried in a packet header field of a reference RTP packet sent by the second communications device to the communications device; and T1r is receiving time when the communications device receives the reference RTP packet.

In some embodiments of the present invention, the reference RTP packet is the Nth RTP packet in an RTP session corresponding to the first RTP packet, the reference RTP packet and the first RTP packet are not a same RTP packet, and N is a positive integer. For example, N may be equal to 1, 2, 3, 4, 6, 8, 10, 20, or another specific value.

The processor 601 may determine, in various manners, that the foregoing transmission status characterization parameter meets the preset condition. For example, the processor 601 may determine, based on the manners illustrated in the foregoing method embodiments, that the foregoing transmission status characterization parameter meets the preset condition. For specific manners, refer to the foregoing descriptions. Details are not provided herein again.

It may be understood that the communications device 600 in this embodiment may be configured to implement some or all functions of the first communications device in the foregoing method embodiments, and a function of each functional module of the communications device 600 may be specifically implemented according to the methods in the foregoing method embodiments. For a specific implementation process, refer to related descriptions in the foregoing method embodiments. Details are not provided herein again.

It may be learned that in solutions of this embodiment, when a transmission status characterization parameter measured and calculated by a communications device 600 meets a preset condition, the communications device 600 sends, to a second communications device, an RTP packet whose packet header field carries the transmission status characterization parameter and/or a sending rate adjustment indication. In addition, generally an RTP packet has a better real-time property and sending flexibility than an RTCP packet. Therefore, the communications device 600 can more timely feed back, to the second communications device, a transmission status characterization parameter estimated by the communications device 600 or determine a sending rate adjustment indication based on the transmission status characterization parameter, and further the second communications device (if the second communications device sends data to the communications device 600, the second communications device may be considered as a transmit end of

the communications device 600) can improve estimation precision of available network bandwidth between the second communications device and the communications device 600. Further, bandwidth utilization is improved and phenomena such as a delay and an intermittent stop are reduced, thereby improving user experience.

Further, in some embodiments of the present invention, transmission status characterization parameters such as a one-way latency and a packet interval of significant packets are selected to characterize a transmission status, and these parameters are more sensitive to a delay caused by a bandwidth limitation, so that a detection speed of available network bandwidth can be accelerated. When network bandwidth is limited, there is generally an increase in a transmission latency of an RTP packet at first. Because transmission status characterization parameters such as a one-way latency and a packet interval of significant packets may be calculated in real time according to an RTP packet stream, a network transmission status can be perceived at an initial stage of network congestion, and the transmission status is fed back to a transmit end, so that after receiving the feedback, the transmit end performs operations such as an estimation of available network bandwidth and an adjustment to a sending rate. Further, occurrence of more severe congestion or packet loss can be prevented during network transmission, and therefore the sending rate is close to actual available network bandwidth.

Further, if a dual-threshold mechanism is used to determine whether a transmission status characterization parameter (for example, a one-way latency and a packet interval of significant packets) meets a preset condition, an abnormal feedback, which causes that a transmit end frequently adjusts a sending bit rate, due to a slight fluctuation of network bandwidth can be prevented, so that stability and robustness of a bandwidth detection mechanism can be greatly improved.

A communications device mentioned in each embodiment of the present invention, for example, may be a communications terminal device such as a mobile phone or a computer, and may also be a communications device such as a server.

Referring to FIG. 7, FIG. 7 is a schematic diagram of a modular architecture of a communications device according to an embodiment of the present invention. Any one of the methods for detecting a network transmission status provided in the foregoing embodiments of present invention, for example, may be specifically implemented by a module for detecting a network transmission status that is in the architecture shown in FIG. 7. Certainly, the communications device is not limited to the architecture illustrated in FIG. 7 and may further be adaptively changed.

An embodiment of the present invention provides a computer storage medium, where the foregoing computer storage medium stores a program, and some or all steps of any one of the methods for detecting a network transmission status provided in the foregoing embodiments of the present invention may be included when the foregoing program is being executed.

It should be noted that, for brief description, the foregoing method embodiments are represented as a series of actions. However, persons skilled in the art should appreciate that the present invention is not limited to the described order of the actions, because according to the present invention, some steps may be performed in other orders or simultaneously. In addition, persons skilled in the art should also understand that the embodiments described in this specification all belong to exemplary embodiments, and the involved actions and modules are not necessarily mandatory to the present invention.

In the foregoing embodiments, the description of each embodiment has respective focuses. For a part that is not described in detail in an embodiment, reference may be made to related descriptions in other embodiments.

In the several embodiments provided in the present application, it should be understood that the disclosed apparatus may be implemented in other manners.For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal

computer, a server, or a network device) to perform all or a part of the steps of the methods described in the embodiments of the present invention. The foregoing storage medium includes: any medium that can store program code, such as a USB flash drive, a read-only memory (ROM, Read-Only Memory), a random access memory (RAM, Random Access Memory), a removable hard disk, a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method for detecting a network transmission status, comprising:

   measuring and calculating, by a first communications device, a transmission status characterization parameter used to characterize a status of network transmission between the first communications device and a second communications device; and
   when the transmission status characterization parameter meets a preset condition, sending, by the first communications device, a Real-Time Transport Protocol RTP packet to the second communications device, wherein a packet header field of the RTP packet carries at least one of a sending rate adjustment indication and the transmission status characterization parameter, and the sending rate adjustment indication is determined based on the transmission status characterization parameter.

2. The method according to claim 1, wherein that a packet header field of the RTP packet carries at least one of a sending rate adjustment indication and the transmission status characterization parameter is specifically that: an extension field of the packet header field of the RTP packet carries at least one of the sending rate adjustment indication and the transmission status characterization parameter.

3. The method according to claim 1 or 2, wherein the transmission status characterization parameter comprises at least one of the following parameters:

   a round-trip latency between the first communications device and the second communications device, a one-way latency from the second communications device to the first communications device, a packet loss rate of an RTP packet between the first communications device and the second communications device, and a packet interval of significant packets in RTP packets from the second communications device to the first communications device.

4. The method according to claim 3, wherein:

   the transmission status characterization parameter comprises the packet interval of significant packets in RTP packets from the second communications device to the first communications device; and
   the measuring and calculating a transmission status characterization parameter used to characterize a status of network transmission between the first communications device and a second communications device comprises: based on receiving time when adjacent significant packets in RTP packets are received from the second communications device, measuring and calculating the packet interval of significant packets in RTP packets from the second communications device to the first communications device.

5. The method according to claim 3 or 4, wherein the transmission status characterization parameter comprises the one-way latency from the second communications device to the first communications device; and
   the measuring and calculating a transmission status characterization parameter used to characterize a status of network transmission between the first communications device and a second communications device comprises: measuring and calculating the one-way latency from the second communications device to the first communications device based on the following formula: $Cs = (Ts - T1s) - (Tr - T1r)$, wherein:
   Cs is the one-way latency from the second communications device to the first communications device; and
   Ts is sending time indicated by a sending timestamp carried in a packet header field of a first RTP packet sent by the second communications device to the first communications device; Tr is receiving time when the first communications device receives the first RTP packet; T1s is sending time indicated by a sending timestamp carried in a packet header field of a reference RTP packet sent by the second communications device to the first communications device; and T1r is receiving time when the first communications device receives the reference RTP packet.

**6.** The method according to claim 5, wherein the reference RTP packet is the $N^{th}$ RTP packet in an RTP session corresponding to the first RTP packet, the reference RTP packet and the first RTP packet are not a same packet, and N is a positive integer.

**7.** A communications device, comprising:

a measuring and calculating unit, configured to measure and calculate a transmission status characterization parameter used to characterize a status of network transmission between the communications device and a second communications device; and
a sending unit, configured to, when the transmission status characterization parameter meets a preset condition, send a Real-Time Transport Protocol RTP packet to the second communications device, wherein a packet header field of the RTP packet carries at least one of a sending rate adjustment indication and the transmission status characterization parameter, and the sending rate adjustment indication is determined based on the transmission status characterization parameter.

**8.** The communications device according to claim 7, wherein that a packet header field of the RTP packet carries at least one of a sending rate adjustment indication and the transmission status characterization parameter is specifically that:

an extension field of the packet header field of the RTP packet carries at least one of the sending rate adjustment indication and the transmission status characterization parameter.

**9.** The communications device according to claim 7 or 8, wherein the transmission status characterization parameter comprises at least one of the following parameters: a round-trip latency between the communications device and the second communications device, a one-way latency from the second communications device to the communications device, a packet loss rate of an RTP packet between the communications device and the second communications device, and a packet interval of significant packets in RTP packets from the second communications device to the communications device.

**10.** The communications device according to claim 9, wherein:

the transmission status characterization parameter comprises the packet interval of significant packets in RTP packets from the second communications device to the communications device; and
the measuring and calculating unit is specifically configured to, based on receiving time of received adjacent significant packets in RTP packets from the second communications device, measure and calculate the packet interval of significant packets in RTP packets from the second communications device to the communications device.

**11.** The communications device according to claim 9 or 10, wherein the transmission status characterization parameter comprises the one-way latency from the second communications device to the communications device; and
the measuring and calculating unit is specifically configured to, measure and calculate the one-way latency from the second communications device to the communications device based on the following formula: $Cs = (Ts - T1s) - (Tr - T1r)$, wherein:

Cs is the one-way latency from the second communications device to the communications device; and
Ts is sending time indicated by a sending timestamp carried in a packet header field of an RTP packet sent by the second communications device to the communications device; Tr is receiving time when the communications device receives the RTP packet; T1s is sending time indicated by a sending timestamp carried in a packet header field of a reference RTP packet sent by the second communications device to the communications device; and T1r is receiving time when the communications device receives the reference RTP packet.

**12.** The communications device according to claim 11, wherein the reference RTP packet is the $N^{th}$ RTP packet in an RTP session corresponding to the RTP packet, the reference RTP packet and the first RTP packet are not a same packet, and N is a positive integer.

**Amended claims in accordance with Rule 137(2) EPC.**

1. A method for detecting a network transmission status, comprising:

   measuring and calculating, by a first communications device, a transmission status characterization parameter used to characterize a status of network transmission between the first communications device and a second communications device(step 101); and
   when the transmission status characterization parameter meets a preset condition, sending, by the first communications device, a Real-Time Transport Protocol, RTP, packet to the second communications device, wherein a packet header field of the RTP packet carries at least one of a sending rate adjustment indication and the transmission status characterization parameter, and the sending rate adjustment indication is determined based on the transmission status characterization parameter, and the sending rate adjustment indication instructs the second communications device to decrease a sending rate of sending an RTP packet to the first communications device(step 102).

2. The method according to claim 1, wherein that a packet header field of the RTP packet carries at least one of a sending rate adjustment indication and the transmission status characterization parameter is specifically that: an extension field of the packet header field of the RTP packet carries at least one of the sending rate adjustment indication and the transmission status characterization parameter.

3. The method according to claim 1 or 2, wherein the transmission status characterization parameter comprises at least one of the following parameters:

   a round-trip latency between the first communications device and the second communications device, a one-way latency from the second communications device to the first communications device, a packet loss rate of an RTP packet between the first communications device and the second communications device, and a packet interval of significant packets in RTP packets from the second communications device to the first communications device, the packet interval is used to compare with a preset threshold.

4. The method according to claim 3, wherein:

   the transmission status characterization parameter comprises the packet interval of significant packets in RTP packets from the second communications device to the first communications device; and
   the measuring and calculating a transmission status characterization parameter used to characterize a status of network transmission between the first communications device and a second communications device comprises: based on receiving time when adjacent significant packets in RTP packets are received from the second communications device, measuring and calculating the packet interval of significant packets in RTP packets from the second communications device to the first communications device.

5. The method according to claim 3 or 4, wherein the transmission status characterization parameter comprises the one-way latency from the second communications device to the first communications device; and
   the measuring and calculating a transmission status characterization parameter used to characterize a status of network transmission between the first communications device and a second communications device comprises: measuring and calculating the one-way latency from the second communications device to the first communications device based on the following formula: $Cs = (Ts - T1s) - (Tr - T1r)$, wherein:
   Cs is the one-way latency from the second communications device to the first communications device; and
   Ts is sending time indicated by a sending timestamp carried in a packet header field of a first RTP packet sent by the second communications device to the first communications device; Tr is receiving time when the first communications device receives the first RTP packet; T1s is sending time indicated by a sending timestamp carried in a packet header field of a reference RTP packet sent by the second communications device to the first communications device; and T1r is receiving time when the first communications device receives the reference RTP packet.

6. The method according to claim 5, wherein the reference RTP packet is the $N^{th}$ RTP packet in an RTP session corresponding to the first RTP packet, the reference RTP packet and the first RTP packet are not a same packet, and N is a positive integer.

7. A communications device(400), comprising:

a measuring and calculating unit(410), configured to measure and calculate a transmission status characterization parameter used to characterize a status of network transmission between the communications device and a second communications device; and
a sending unit(420), configured to, when the transmission status characterization parameter meets a preset condition, send a Real-Time Transport Protocol, RTP, packet to the second communications device, wherein a packet header field of the RTP packet carries at least one of a sending rate adjustment indication and the transmission status characterization parameter, and the sending rate adjustment indication is determined based on the transmission status characterization parameter, and the sending rate adjustment indication instructs the second communications device to decrease a sending rate of sending an RTP packet to the first communications device.

**8.** The communications device (400) according to claim 7, wherein that a packet header field of the RTP packet carries at least one of a sending rate adjustment indication and the transmission status characterization parameter is specifically that: an extension field of the packet header field of the RTP packet carries at least one of the sending rate adjustment indication and the transmission status characterization parameter.

**9.** The communications device(400) according to claim 7 or 8, wherein the transmission status characterization parameter comprises at least one of the following parameters: a round-trip latency between the communications device and the second communications device, a one-way latency from the second communications device to the communications device, a packet loss rate of an RTP packet between the communications device and the second communications device, and a packet interval of significant packets in RTP packets from the second communications device to the communications device, the packet interval is used to compare with a preset threshold.

**10.** The communications device (400) according to claim 9, wherein:

the transmission status characterization parameter comprises the packet interval of significant packets in RTP packets from the second communications device to the communications device; and
the measuring and calculating unit (410) is specifically configured to, based on receiving time of received adjacent significant packets in RTP packets from the second communications device, measure and calculate the packet interval of significant packets in RTP packets from the second communications device to the communications device.

**11.** The communications device (400) according to claim 9 or 10, wherein the transmission status characterization parameter comprises the one-way latency from the second communications device to the communications device; and
the measuring and calculating unit (410) is specifically configured to, measure and calculate the one-way latency from the second communications device to the communications device based on the following formula: $Cs = (Ts - T1s) - (Tr - T1r)$, wherein:

Cs is the one-way latency from the second communications device to the communications device; and
Ts is sending time indicated by a sending timestamp carried in a packet header field of an RTP packet sent by the second communications device to the communications device; Tr is receiving time when the communications device receives the RTP packet; T1s is sending time indicated by a sending timestamp carried in a packet header field of a reference RTP packet sent by the second communications device to the communications device; and T1r is receiving time when the communications device receives the reference RTP packet.

**12.** The communications device (400) according to claim 11, wherein the reference RTP packet is the $N^{th}$ RTP packet in an RTP session corresponding to the RTP packet, the reference RTP packet and the first RTP packet are not a same packet, and N is a positive integer.

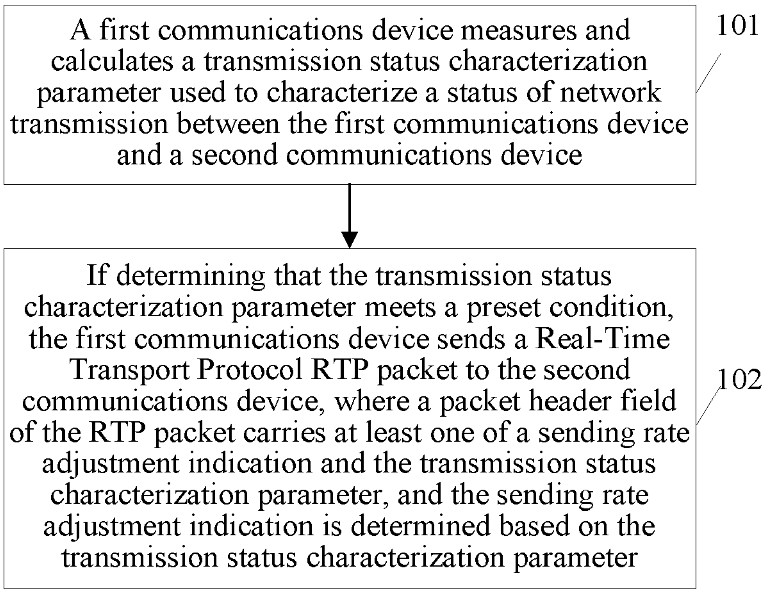
A first communications device measures and calculates a transmission status characterization parameter used to characterize a status of network transmission between the first communications device and a second communications device
101
If determining that the transmission status characterization parameter meets a preset condition, the first communications device sends a Real-Time Transport Protocol RTP packet to the second communications device, where a packet header field of the RTP packet carries at least one of a sending rate adjustment indication and the transmission status characterization parameter, and the sending rate adjustment indication is determined based on the transmission status characterization parameter
102

FIG. 1-a

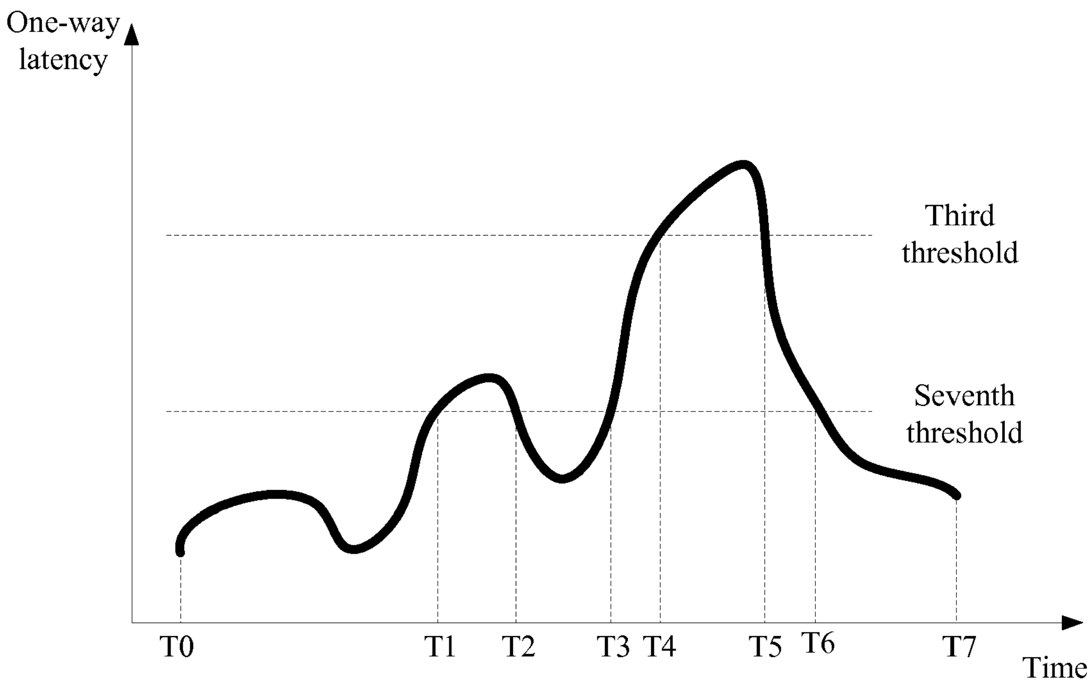
One-way latency
Third threshold
Seventh threshold
T0
T1
T2
T3
T4
T5
T6
T7
Time

FIG. 1-b

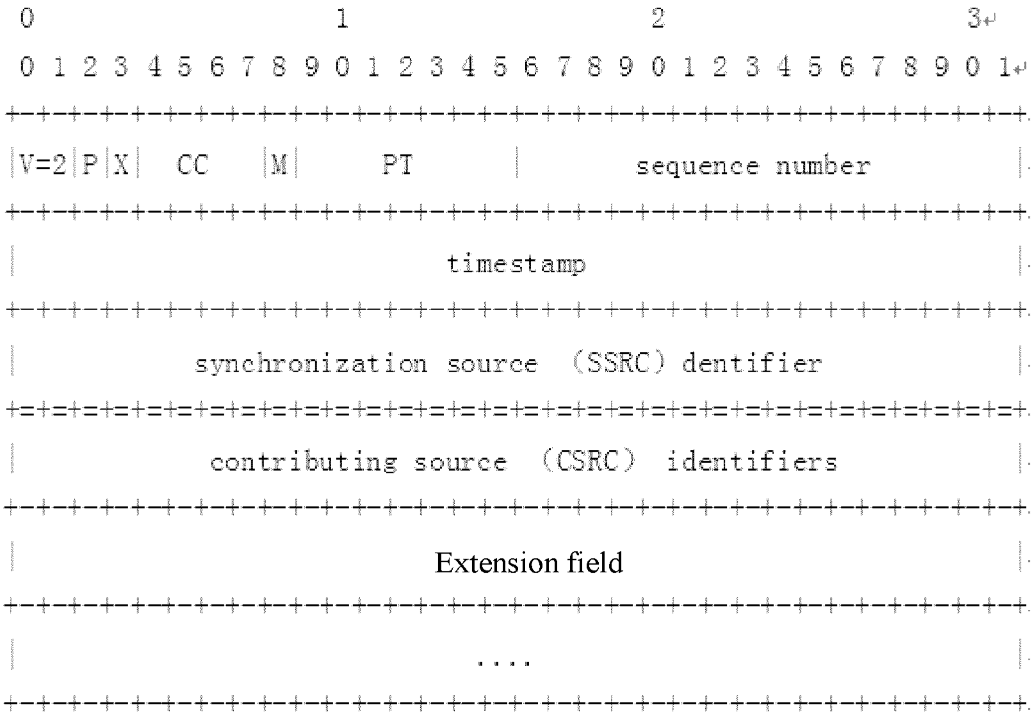
0 1 2 3
0 1 2 3 4 5 6 7 8 9 0 1 2 3 4 5 6 7 8 9 0 1 2 3 4 5 6 7 8 9 0 1
V=2
P
X
CC
M
PT
sequence number
timestamp
synchronization source (SSRC) dentifier
contributing source (CSRC) identifiers
Extension field
....

FIG. 2

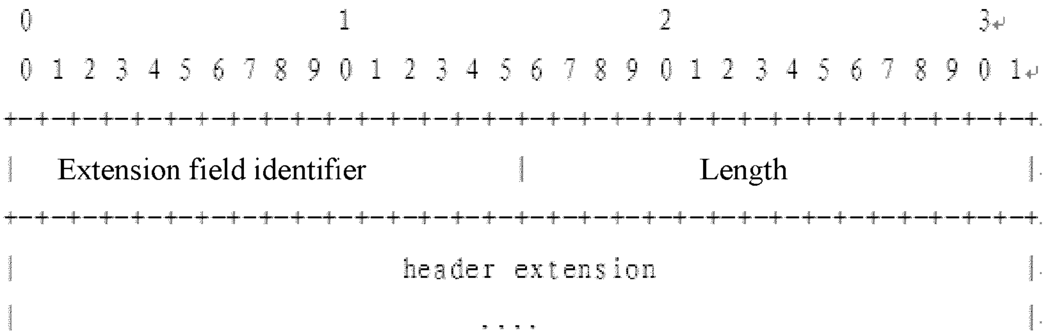
0 1 2 3
0 1 2 3 4 5 6 7 8 9 0 1 2 3 4 5 6 7 8 9 0 1 2 3 4 5 6 7 8 9 0 1
Extension field identifier
Length
header extension
....

FIG. 3

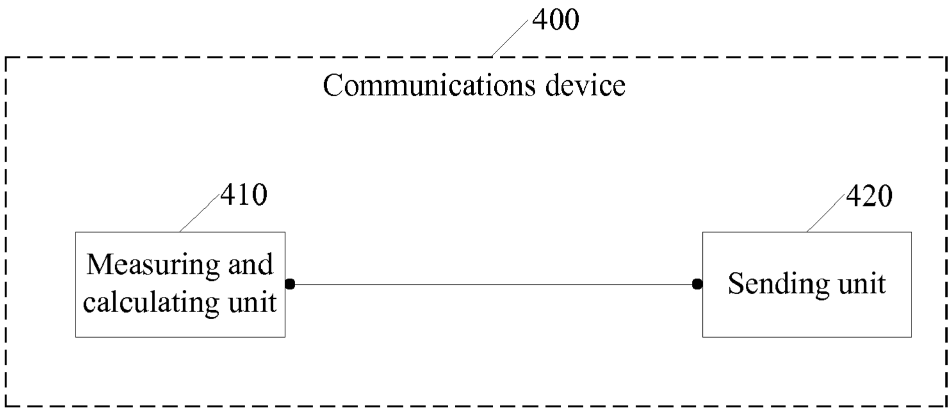
400
Communications device
410
Measuring and calculating unit
420
Sending unit

FIG. 4

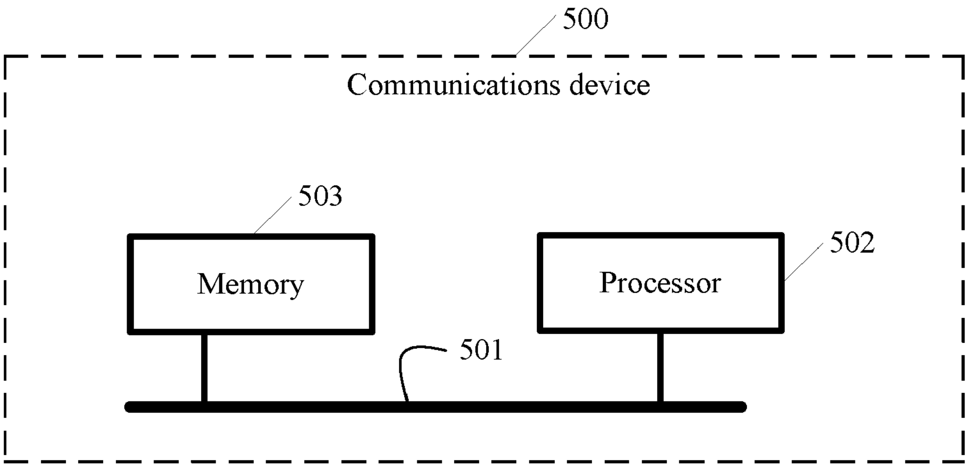
500
Communications device
503
Memory
Processor
502
501

FIG. 5

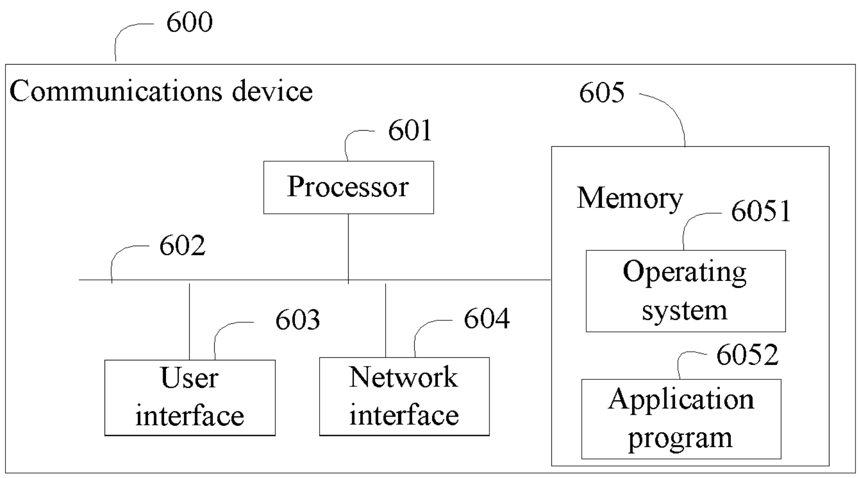
600
Communications device
605
601
Processor
Memory
6051
602
Operating system
603
604
6052
User interface
Network interface
Application program

FIG. 6

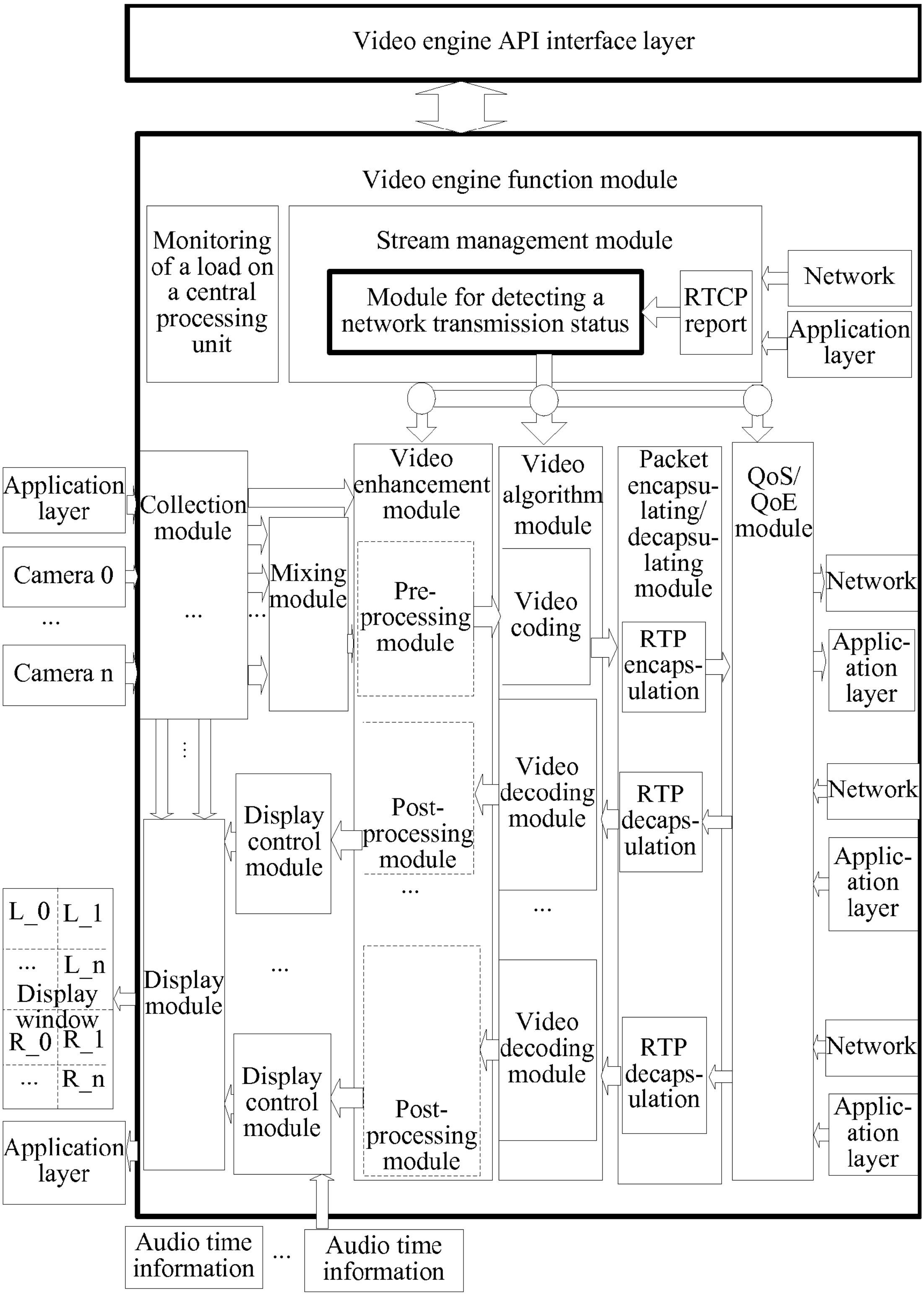
Video engine API interface layer
Video engine function module
Monitoring of a load on a central processing unit
Stream management module
Module for detecting a network transmission status
RTCP report
Network
Application layer
Application layer
Camera 0
...
Camera n
Collection module
...
Mixing module
Video enhancement module
Pre-processing module
Post-processing module
...
Post-processing module
Video algorithm module
Video coding
Video decoding module
...
Video decoding module
Packet encapsulating/ decapsulating module
RTP encapsulation
RTP decapsulation
RTP decapsulation
QoS/ QoE module
Network
Application layer
Network
Application layer
Network
Application layer
Display control module
...
Display control module
Display module
L_0 L_1
... L_n
Display window
R_0 R_1
... R_n
Application layer
Audio time information
...
Audio time information

FIG. 7

Europäisches Patentamt
European Patent Office
Office européen des brevets

# EUROPEAN SEARCH REPORT

Application Number
EP 15 15 4872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/252701 A1 (ANANDAKUMAR KRISHNASAMY [US] ET AL) 16 December 2004 (2004-12-16) * page 13, paragraph 215 - page 16, paragraph 250 * * figure 3 * | 1-12 | INV. H04L12/26 H04L29/06 H04L12/825 |
| X | WO 2009/141105 A1 (SLEVER SOLUTIONS LTD [GB]; REVELS WILLIAM [GB]) 26 November 2009 (2009-11-26) * page 12, line 12 - page 18, line 24 * * page 20, line 23 - page 22, line 19 * * figures 4, 6, 8, 9 * | 1-12 | |
| X | WO 2014/064496 A1 (ALCATEL LUCENT [FR]) 1 May 2014 (2014-05-01) * page 10, line 24 - page 12, line 21 * * page 17, line 12 - page 21, line 14 * * figures 3, 6, 7, 10 * | 1-12 | |
| A | US 2013/083808 A1 (SRIDHAR SRIRAM [US]) 4 April 2013 (2013-04-04) * page 1, paragraph 7 - page 2, paragraph 23 * * page 3, paragraph 47 - page 5, paragraph 85 * * figures 1, 3-7 * | 1-12 | TECHNICAL FIELDS SEARCHED (IPC) |
| A | US 2008/192710 A1 (BALACHANDRAN KRISHNA [US] ET AL) 14 August 2008 (2008-08-14) * page 1, paragraph 5 - page 1, paragraph 8 * * page 3, paragraph 24 - page 4, paragraph 34 * * figures 1, 2 * | 1-12 | H04L |
| | -/-- | | |

The present search report has been drawn up for all claims

1

| Place of search | Date of completion of the search | Examiner |
|---|---|---|
| Munich | 8 May 2015 | Koch, György |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 15 15 4872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 441 288 A2 (MICROSOFT CORP [US]) 28 July 2004 (2004-07-28) * page 4, paragraph 21 - page 7, paragraph 44 * * figures 1-4 * ----- | 1-12 | |
| A | US 2008/151776 A1 (KURE YOSHINOBU [JP]) 26 June 2008 (2008-06-26) * page 3, paragraph 37 - page 3, paragraph 46 * * page 4, paragraph 52 - page 5, paragraph 69 * * page 6, paragraph 77 - page 7, paragraph 96 * * figures 1-3, 6-8 * ----- | 1-12 | |
| | | | TECHNICAL FIELDS SEARCHED (IPC) |

The present search report has been drawn up for all claims

1

| Place of search | Date of completion of the search | Examiner |
|---|---|---|
| Munich | 8 May 2015 | Koch, György |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
&: member of the same patent family, corresponding document

EPO FORM 1503 03.82 (P04C01)

# ANNEX TO THE EUROPEAN SEARCH REPORT ON EUROPEAN PATENT APPLICATION NO. EP 15 15 4872

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2015

| Patent document cited in search report | Publication date | Patent family member(s) | Publication date |
|---|---|---|---|
| US 2004252701 A1 | 16-12-2004 | US 2004252701 A1 | 16-12-2004 |
| | | US 2009323679 A1 | 31-12-2009 |
| | | US 2013250938 A1 | 26-09-2013 |
| WO 2009141105 A1 | 26-11-2009 | EP 2286555 A1 | 23-02-2011 |
| | | US 2011069616 A1 | 24-03-2011 |
| | | WO 2009141105 A1 | 26-11-2009 |
| WO 2014064496 A1 | 01-05-2014 | CN 103780954 A | 07-05-2014 |
| | | TW 201427452 A | 01-07-2014 |
| | | WO 2014064496 A1 | 01-05-2014 |
| US 2013083808 A1 | 04-04-2013 | NONE | |
| US 2008192710 A1 | 14-08-2008 | CN 101611600 A | 23-12-2009 |
| | | EP 2122941 A1 | 25-11-2009 |
| | | JP 5373638 B2 | 18-12-2013 |
| | | JP 2010518783 A | 27-05-2010 |
| | | KR 20090118936 A | 18-11-2009 |
| | | US 2008192710 A1 | 14-08-2008 |
| | | WO 2008100477 A1 | 21-08-2008 |
| EP 1441288 A2 | 28-07-2004 | AT 428140 T | 15-04-2009 |
| | | BR PI0400085 A | 14-09-2004 |
| | | CN 1518283 A | 04-08-2004 |
| | | EP 1441288 A2 | 28-07-2004 |
| | | JP 4448341 B2 | 07-04-2010 |
| | | JP 2004236316 A | 19-08-2004 |
| | | KR 20040068880 A | 02-08-2004 |
| | | US 2004148423 A1 | 29-07-2004 |
| US 2008151776 A1 | 26-06-2008 | CN 101212280 A | 02-07-2008 |
| | | JP 4356742 B2 | 04-11-2009 |
| | | JP 2008160499 A | 10-07-2008 |
| | | KR 20080059508 A | 30-06-2008 |
| | | TW 200835236 A | 16-08-2008 |
| | | US 2008151776 A1 | 26-06-2008 |
| | | US 2012008644 A1 | 12-01-2012 |

EPO FORM P0459

For more details about this annex : see Official Journal of the European Patent Office, No. 12/82